# EUROPEAN PATENT APPLICATION

(11) **EP 0 626 247 A1**
(43) Date of publication of application: **30.11.1994**
(21) Application number: 94106881.9
(22) Date of filing: 03.05.1994
(51) Int. Cl.: B29C 47/28, B29C 47/06

(54) **Internally stacked blown film die**

(30) Priority: 07.05.1993 US 59217
(71) Applicant: BATTENFELD GLOUCESTER ENGINEERING Co., Inc., Gloucester, Massachusetts 01931-0900 (US)
(72) Inventor: Smith, David J., Topsfield, MA 01983 (US)
(74) Representative: Sparing - Röhl - Henseler Patentanwälte

(57) **Abstract**

A multi-layer annular die (40) is disclosed that permits the simple interchange of layer structure and change in layer numbers. The die (40) is equipped with a series of essentially identical feed modules (60) in which all axial passages of similar function are located at the same distance from the arial centerline and are also separated by a common angular spacing. Changes in the number of layers is accomplished by altering the number of feed modules (60), while alteration of layer structure brought about by rotation of the feed modules. Unlike prior stackable dies, resin flow is essentially radially outward from the die centerline to the discharge plenum, and all resin inlets are at a common height in the die base (41).

## Description

The blown film process for producing thin plastic film utilizes extrusion of molten plastic through an annular die and the closing of the extruded tube by a set of nip rollers to define a plastic bubble which is subsequently inflated by a volume of air. The air introduced into the bubble is used to produce an increase in the diameter of the bubble over that of the discharge orifice of the annular die. For a given die diameter, the extent of increase in bubble diameter, commonly known as the blow up ratio, and the linear speed of the nip rollers in comparison to the linear rate of extrusion at the die, set the desired circumference of the film, the film thickness, and the balance of the mechanical properties of the finished film. Variations on the blown film process are also known which include the introduction of chilled air into the bubble above the die to hasten cooling of the extrudate in addition to producing the desired blow up ratio, hereinafter referred to as internal bubble cooling (IBC); and the use of multiple extruders delivering a number of different materials to the annular die provided, at least in part, with separate flow passages for each material, to produce a layered film. These layered films are commonly referred to as coextruded films, which reflects the manufacturing process, i.e. coextrusion. The present invention deals with the mechanical structure of a multi-layer blown film die which allows simple exchange of the layer structure in the final film and for variation in the number of layers in the die.

Multi-layer blown film dies typically take one of two general mechanical configurations. For dedicated layer orientation and high production rates, including dies intended for IBC applications, the preferred configuration is a multiple spiral mandrel die in which the feed paths for the individual resin layers are arranged concentrically. A representative die of this type is shown in U.S. Patent no. 3,966,861.

A second category of die is the so-called stackable or pancake die. Representative examples of this die type are shown in U.S. Patent Nos. 3,337,914 and 4,798,526. As shown in these patents, resin is introduced to each layer at the periphery of the die, and is subsequently distributed circumferentially via a series of distribution channels, and then flows radially inwardly until it is finally discharged against a central mandrel. Each layer of the die is essentially identical to the other, so that layers can be added or subtracted from the die simply by adding or subtracting these pancake modules from the die, and then altering the length of the central mandrel to accomodate the new overall length of the die.

While dies of this stackable type appear to offer their owners great flexibility in layer number and configuration, their overall structure has serious mechanical limitations. For instance, resin feeds at the periphery of the die, at least in the case of verticallly oriented dies as used in the production of blown film, requires that either the centerline height of the extruder supplying resin to each respective layer be brought to the elevation of that layer on the die, or that an adapter or resin piping system be used to achieve the same result. If the layer structure or number is changed, the extruder must be adopted to the new configuration. For concentric dies, i.e. those previously referred to as spiral mandrel dies, it is customary for all extruders to have a constant centerline height with their respective resin flows entering a feedblock at the base of the die.

A further drawback to the pancake style die, however, involves their mechanical structure. Since the resin flows from the periphery of the die inwardly, the separating forces on the individual die components due to the pressure of the resin is many times greater than that for a similar size, i.e. outlet diameter, concentric feed die. This structural weakness effectively limits prior art stackable dies to relatively small outlet diameters as compared to spiral mandrel dies. Dies of a small outlet diameter have an additional disadvantage from a production rate standpoint, namely that the small diameter hinders the use of the rate increasing process know as internal bubble cooling. As multilayer films of the type commonly made with these pancake type dies are complex barrier type structures that require large capital expenditures for machinery and equipment, the relatively large increases in output that can be achieved for a moderate increase in capital expenditure by the use of internal bubble cooling has been a serious drawback to their widespread use.

The present invention is defined by claim 1. The invention permits achievement of several advantages:
One may produce a stackable multi-layer annular die layer that can be adopted to utilize internal bubble cooling technology. It is a further advantage of the present invention to produce a multi-layer modular annular die of greater diameter than has heretofore been possible. A still further advantage of the present invention is to produce a stackable multi-layer die in which all extruders are placed on a constant centerline height. These and other advantages of the invention will become apparent from the following specification and description.

An embodiment of the invention there is a multi-layer stackable die which comprises a die base, including on or more resin inlet ports, a hollow largly cylindrical external die body mounted on said die base, a sizing ring mounted on said die body, one or more inverted frustro-conical feed modules, each of said feed modules having an external frustro-conical surface and an internal frustro-conical surface, each of said feed modules having multiple spiral threads on its outer frustro-conical surfaces, each of said spiral threads in operative connection with a resin feed port, said feed ports originating at the axial centerline of the module, a first feed module mounted on said die base within said external die body, all remaining feed modules mounted on a previous feed module and within the external die body, said external frustro-conical surface of one module and the internal frustro-conical surface of the preceeding module defining therebetween a resinn flow passage, said flow passage opening onto the interior surface of the die body, an external sizing ring mounted on said exterior die body, a filler piece which includes a cylindrical upper surface mounted on the uppermost feed module, said sizing ring and said filter piece defining therebetween the annular discharge orifice.

FIG. 1 shows the overall layout of a blown film line incorporating the present invention.

FIG. 2 is a sectional view of a three layer die according to the present invention.

FIG. 3 is a sectional view of a feed module along the section line c-c identified in Fig. 2.

FIG. 4 is a sectional view of a five layer die made by adding feed modules to the die shown in Fig. 2.

FIG. 5 is an alternate embodiment of the five layer die of Fig. 4.

FIG. 6 is an alternate embodiment of a feed module.

FIG. 7 is a partial sectional view showing the intersection of the resin discharge from a discharge plenum with prior extruded resin layers.

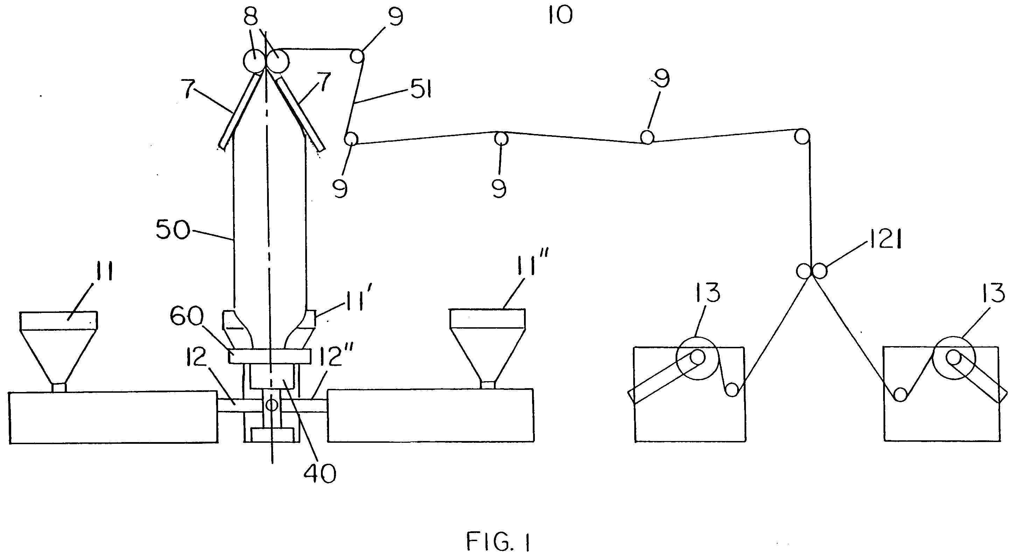

A representative multi-layer blown film line, 10, is shown in Fig. 1. There are three separate extruders in this line, 11, 11', and 11'', that serve to supply heat softened plastic resin through adapters 12, 12', and 12'' to die 40. Die 40 is an annular three layer die used to extrude a softened plastic tube 50, that is filled with low pressure air to expand the tube O.D. to a substantially larger diameter than the die. Air ring 60 is mounted upon die 40 and surrounds tube 50 and is used to apply cooling air to the outside of tube 50.

Located above die 40 are collapser racks 7 and nip roll assembly 8. Collapsing racks 7 and nip rolls 8 are used to uniformly flatten the round bubble to two overlapping plies of film connected at their edges. Nip roll assembly 8 also serves to pinch closed one end of the tubular bubble, the other end is closed by die 40, to maintain air in the bubble and to draw tube 50 away from die 40. Although not shown in Fig. 1, nip roll assembly 8 is be mounted in a tower structure, the overall height of the structure being dependant upon the cooling time required for the specific multilayer structure being extruded.

The flattened tubular film 51 is lead from the tower over a series of idler rolls 9, to secondary nip roll assembly 121 ,and from there to winder 13. At winder 13 the film is wound into rolls for further processing.

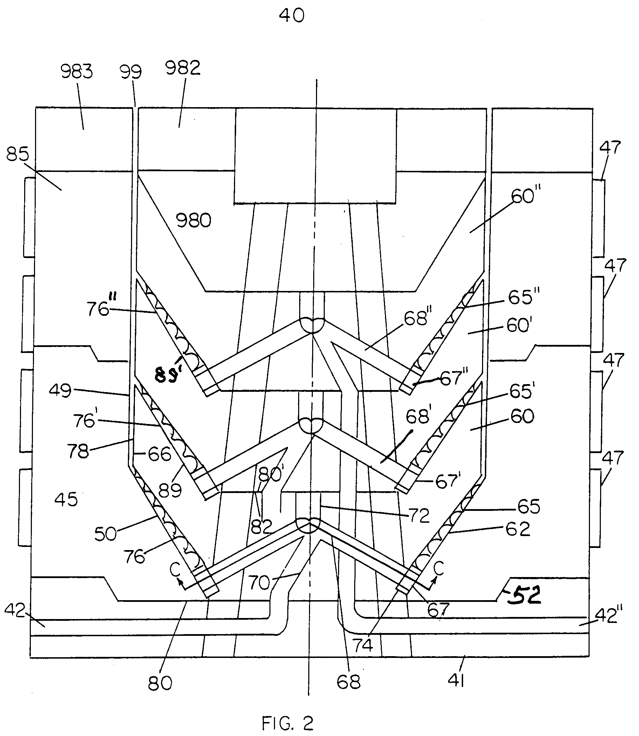

Fig. 2 shows a cross sectional view of three layer die 40 in accordance with the present invention. Conventional elements used to hold the die together, i.e. bolts, are not shown in the figures to aid thawing legibility. At the bottom of die 40 is a die base 41, which includes three inlet passages for resin, 42 and 42'' are shown in the plane of the FIG 2, 42' is not shown in this figure. All inlet passages are accomodated in the die base, and the centerline heights of all the inlet passages are at the same level. Although the initial portion of inlet passages 42, 42', 42'' run horizontally, the individual inlet passages undergo a 90° change in direction in die base 41 to become vertical passages that feed the individual layer.

Mounted on die base 41 is a lower die body section 45. The external surface of die body 45 is generally cylindrical, and this surface is covered by a series of electrical band heaters 47 of sufficient capacity to bring the die to the appropriate operating temperature. Internally, die body 45 has a cylindrial upper surface 49 at the end of die body 45 away from die base 41, and an inverted frustro-conical surface 50 at the end adjacent to die base 41. Die body 45 is mounted to die base 41 in conventional fashion utilizing any construction which will accurately position the die body to the base. As shown at reference number 52, a tapered joint between base and body is currently preferred.

Also mounted on die base 41 and within die body 45 is first feed module 60. Feed module 60 has an exterior inverted frustro-conical surface 62, onto which multiple helical threads 65 of varying depths have been machined. At the point of origin 67 of each of these threads, the helical thread is intersected by layer feed port 68. There usually will be one layer feed port 68 for each helical thread 65 on inverted frustro-conical surface 62. Currently, depending upon overall die size, six or eight layer feed ports 68 and six or eight helical threads are preferred in each module 60. As shown, layer feed ports 68 are brought to the centerline of the feed module 60 to provide for a uniform pressure drop for all feeds in a given module. Also shown in Fig. 2 is transition feed passage 70 which connects the vertical portion of inlet passage 42 to layer feed ports 68 at the module centerline. It has been found to be advantageous to use seperate members at the intersection of the various flow paths to prevent hang up and consequent thermal degradation of resin. Currently, a streamlined flow splitter insert 72 is used at the centerline intersection of transition feed passage 70 and layer feed ports 68, while feed inserts 74 are used to change the direction of the resin flow between each feed port 68 and its respective helical thread 65.

Feed module 60 is mounted on die base 41 along lower mounting surface 80. Proper rotational orientation of module 60 must be maintained with respect to the various feed passages, 42, 42', 42'' in the die base to provide for the appropriate layer structure in the extruded product. Further, the die base inlet passage 42, 42', 42'' must be smoothly aligned across lower mounting surface 80 to avoid hangup and consequent thermal degradation of the plastic resin. A resin flow distribution channel 76 is formed between the surface of first feed module 60 bearing multiple helical thread 65 and inverted frustro-conical die body surface 50. Additionally, a resin discharge plenum 78 is formed between inner cylindrical die body surface 49 and module discharge surface 66.

For each layer in the extruded product there will be a separate feed module 60. As shown in FIG. 2, the feed module for the second layer is identified as 60', and that for the third layer as 60''. Each module is of identical form to that of first feed module 60, and will have identical features. For instance second feed module 60' has multiple helical thread 65' in which each helical thread originates at point of helical thread origin 67', is fed by layer feed ports 68' which originate at the module centerline. Feed module 60'' has multiple helical threads 65'' which originate at thread origin 67'' and are fed by larger feed ports 68''.

As shown in Fig. 2, first feed module 60 has a internal frustro-conical surface 89, and an upper mounting surface 82. Second layer feed module 60' is mounted to first feed module 60 along lower mounting surface 80' of second layer feed 60' and upper mounting surface 82 of first layer feed module 60. Proper rotational orientation of feed module 60' with respect to the vertical feed passages 42, 42' and 42'' in first layer feed module 60 must be maintained, as was previously done with respect to the feeds in first layer module 60 and die base 41. A second resin flow distribution channel 76' is formed between helical threads 65' of second layer feed module 60' and the internal frustro-conical surface 89 of first layer feed module 60. In like fashion, a third resin feed channel 76'' is formed between helical threads 65'' of third layer feed module 60'' and the internal frustro-conical surface 89' of second layer feed module 60'.

An upper die body 85 is mounted upon die body 45 to complete the upper exterior portion of the die. As will be described later, upper die body 85 will be exchanged in those instances in which the number of die layers is changed; the length of upper die body 85 will be selected to match the height of the stack of feed modules 60. A filler piece 980 is mounted in the internal frustro-conical recess at the top of feed module 60''. Die pin 982 is mounted upon filler piece 980, and, in conjunction with sizing ring 983 which is mounted upon upper die body 85, defines annular discharge orifice 99.

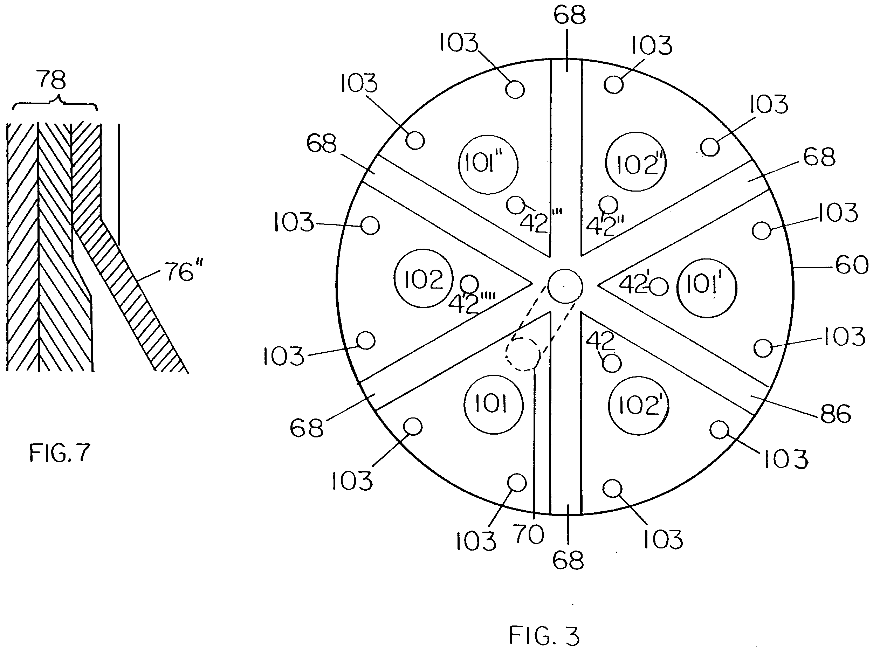

A sectional view of feed module 60 along section CC identified in FIG. 2 is shown in FIG.3. As shown in FIG. 3, module 60 has six individual layer feed ports 68, all of which originate essentially at the centerline of the module. Within the wedge shaped segments defined by layer feed ports 68 are vertical feed passages 42, 42', 42'', 42''' and 42'''', IBC air passages 101, 101' and 101'' and IBC air exhaust passages 102, 102' and 102'', boltholes 103, and transition feed path 70. The size of IBC air passages 101, 101', 101'', 102, 102' and 102'' are made as large as possible consistent with the loads placed on the module by resin pressure to minimize pressure drop in the IBC system. Although round IBC air passages are preferred for ease and efficiency of manufactured holes of other than round cross section could be used to take maximum advantage of the existing area to minimize IBC pressure drop in demanding applications.

As shown in Fig. 3, the number of fully vertical resin feed passages in each module is one less than the number of layer feed passages 68. Each module 60 also contains one transition feed passage 70, which takes resin from the ascending feed passage of the previous module or die base 41 and brings it to the centerline of module 60 where the resin is redirected to the individual layer feed ports 68. Feed ports 68 intersect with the individual helical threads at points of helical thread origin 67. Feed passages 42, 42', 42'', 42''', 42'''' and transition feed passage 70 are all located at a common distance from the module centerline and at equal angular separations from each other. This uniform spacing permits a rapid substitution of the resin feed to a particular layer to be made by a rotation of the feed module to bring transition feed passage 70 into alignment with the desired feed passage 42 in the die base or preceeding feed module. Although not shown in the Figures, customary mechanical devices intended to aid in alignment, successive layers, feed modules e.g. dowel pins, are used to align successive layer feed modules, as is known to one skilled in the mechanical arts. Alternately, however, if a feed module 60 has been configured for a resin of substantially different flow characteristics than the others, it may be necessary to exchange module location within the stack, rather than only rotation.

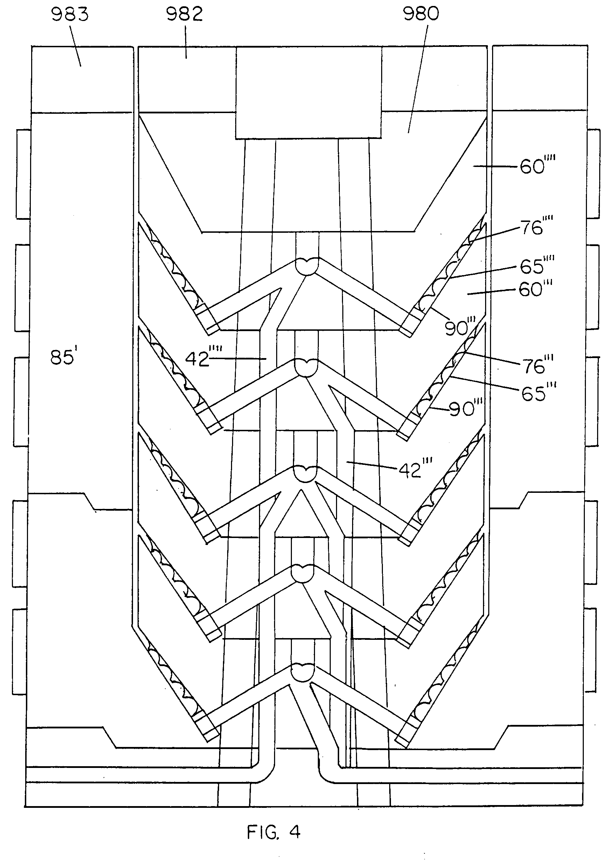

A five layer die is shown in FIG. 4 that was made from the three layer die shown in FIG. 2. Specifically, sizing ring 983, die pin 982, filler piece 980, and upper die body 85 were removed from the die of FIG. 2. Feed modules 60''' and 60'''' were stacked on top of exiting feed modules 60'', 60' and 60 with inlet passages 42''' and 42'''' appropriately aligned to provide for the supply of the desired resin to the layer. Resin distribution channels 76''' and 76'''' are formed between helical thread 65''' and internal frustro-conical surface 90''' and helical thread 65'''' and internal frustro-conical surface 90'' respectively. A longer upper die body 85' having an overall length matched to the height of the five layer stack of modules is mounted upon lower die body 45. Filler piece 980 is replaced into the inverted frustro-conical recess at the top of feed module 60'''', and the complete central column is then fastened together. Die pin 982 is then re-installed on top of filler piece 980, and sizing ring 983 is mounted to upper die body 85' to complete assembly of the die. The change from the three layer die of Fig. 2 to the five layer die of Fig. 4 was accomplished by the mere addition of two feed modules 60''' and 60'''' and the addition of an upper die body 85' of an appropriate length for the five layer stack.

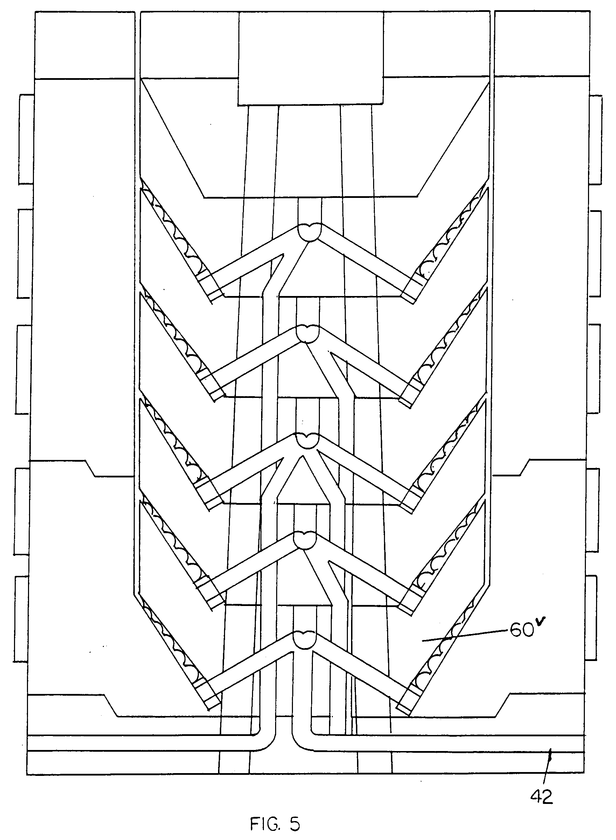

An alternate embodiment for a first layer feed module 60^{v} and die base 41 is shown in FIG. 5. In this embodiment first layer inlet passage 42 is brought to the centerline of the die in the die base 41 and fed axially to module 60^{v}. No sloping transition passage 70 is required. This alternate embodiment for the first layer feed will be useful in those situations in which the innermost and outermost layers will be of different materials or fed from different extruders, and the required number of different resins exceeds the number of layer feeds 68 by one.

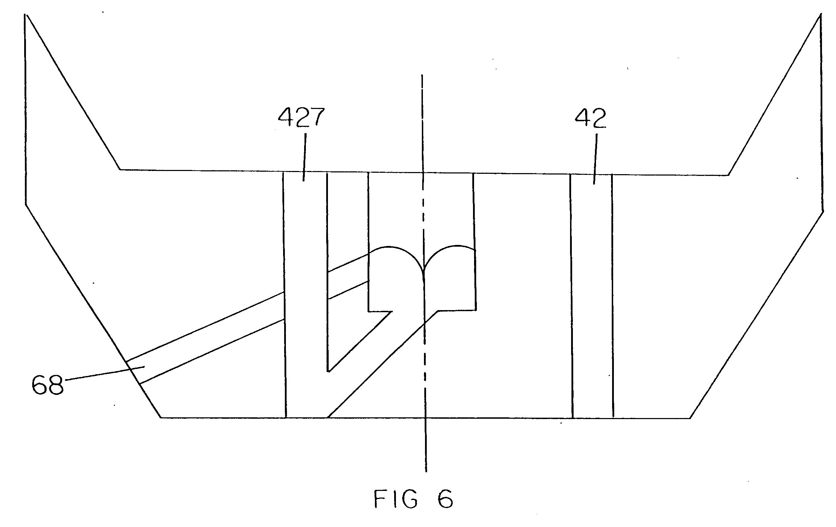

While the previous Figures have shown configurations in which each layer is ultimately fed from a separate extruder, i.e. in the case of a 3 layer die the resulting film structure would be ABC, an alternate configuration of transition feed passage 70 and resin inlet passage 42 as shown in Fig. 6, results in multiple layers being fed from one extruder. As shown in FIG. 6, a branching feed passage 427 accomodates both resin flow to succeeding layers along the axial branch of passage 427 and resin flow to the centerline distribution point of the current module along the inclined branch of resin passage 427. In this case of a three layer die, use of the feed module shown in Fig. 6 as the first module above the die base could result in film having the structure ABA. Resin A would flow to the centerline of the module along the inclined branch of passage 427, and towards subsequent modules along the axial branch of passage 427. In the case of a three layer ABA structure, Resin A would pass through axial passage 42' in second layer feed module 60', to join with feed transition passage 70'' in third layer feed module 60''.

FIG. 7 shows the intersection of the discharge of the resin flow from the third layer distribution channel 76'' with the layered flow in discharge plenum 78 of the five layer die shown in FIG. 4. The resin is discharged from layer distribution channel 76'' onto the previously deposited layers in discharge plenum 78 at an acute angle to minimize the occurrence of interfacial instability in the resin layers. While a small angle between the resin flow is desireable from the standpoint of minimizing interfacial instability, the necessity of having a significant conical angle to provide for the practical nestability of feed modules and sufficient wall thickness for the surfaces covered by the special threads leads to a significantly greater angle.

In operation, the three layer die of FIG. 2 functions as follows: Under the influence of resin pressure generated in extruder, molten resin will flow through inlet passage 42 into transition passage 70. At the centerline of module 60, the resin flowing through transition passage 70 will be split into several layer feed streams, and will then flow along layer feed passages 68 to the points of helical thread origin 67. As previously indicated and as shown in Fig. 2, there are six layer feed passages 68 in module 60.

As the resin exits layer feed passages 68 at point of helical thread origin 67, the direction of resin flow begins to change from a series of discrete essentially radially outward flows to first, a flow essentially parallel to the helical threads to circumferentially distribute resin, and then to circumferentially uniformly distributed mass flowing essentially parallel to interior frustro-conical surface 62. At this point, the resin mass is fills resin distribution channel 76, which, as previously indicated, is formed between interior frustro conical surface 62 and the surface of feed module 60 bearing helical threads. 65. At the outboard end of resin distribution channel 76 resin flow direction changes once again, this time to a direction essentially parallel to the centerline of the die. This parallel flow occurs in annular discharge plenum 78 which is formed between inner cylindrical die body surface 49 and module discharge surface 66.

In like fashion, resin B will enter along inlet passage 42', be brought to the centerline of module 60' by transition feed passage 70', distributed through layer feed passages 68' into resin distribution channel 76'. At the outlet from resin distribution channel 76', resin B is discharged onto the interior diameter surface of resin A, and will flow along with resin A parallel to the centerline of the die. Resin B will be situated between resin A and module discharge surface 66'.

Resin C will in its turn enter along inlet passage 42'', flow through module 60'', and eventually exit from resin distribution channel 76''. In this case, however, resin C will be deposited upon the inside diameter surface of resin B, and will flow along with resin A and resin B to die outlet orifice 99. As is well known to those familiar with multilayer die design, the three layers will maintain their separate identities and not mix with each other over a wide range of temperature and flow conditions. After the discharge from the die, the layered resin stream is handled as one continuous mass, and can be inflated, drawn down, collapsed, and wound as though a single component film.

The addition of modules to the three layer die of FIG. 2 as previously described can result in a die of a significantly greater number of layers than three. Resin flows, however, into the die and through the die, will proceed for each layer in an identical fashion to that in the three layer die. In each instance, the resin will be deposited as a uniform layer in the interior diameter surface of the tube of resin moving through discharge plenum 78.

While the invention has been described in conjunction with specific embodiments, it is evident that many alternates, modifications, variations and changes will become apparent to those skilled in the art in view of the foregoing description. Accordingly, it is intended that the present invention includes all such alternates, modifications, variations and changes that fall within the spirit and scope of the following claims.

## Claims

1. An annular die for extrusion of resin tubes, comprising:
- a hollow die body (45) having an internal surface, said internal surface comprising a cylindrical top portion (49) and an inverted frustro-conical bottom portion (50),
- at least one feed module (60) mounted within said hollow die body and having an external surface (66) defining together with said internal surface of said die body a resin flow passage, said feed module further having an internal inverted frustro-conical surface (89) of a shape identical to that of said bottom portion of said die body so as to receive either a second feed module (60') of identical outer shape or a filler piece (980),
- resin feed channels (42, 70, 68) connecting an external source of molten resin to said resin flow passage.

2. The die of claim 1, comprising:
a. a die base (41), said base containing resin inlet ports (42),
b. a hollow die body (45) mounted on said die base, the inner surface of said die body having a cylindrical portion (49) and having an inverted frustro-conical portion (50) adjacent to the die base,
c. a feed module (60) mounted on said die base and within said die body, said module having both external and internal inverted frustro-conical surfaces, said external inverted frustro-conical surface having a multiple spiral thread (65) thereon, said feed module having a layer feed passage (70, 72, 76) originating at the centerline of said feed module and ending at the point of origin of a spiral thread, said module having a vertically oriented resin passage not intersecting the centerline for the passage of resin through the feed module, said feed module further having an inclined resin passage intersecting the centerline of this module and said layer feed passages,
d. a sizing ring (983) mounted on said die body, and
e. a die pin (982) mounted on a feed module, said sizing ring and said die pin defining therebetween the annular discharge orifice (99).

3. A die according to claim 2 further comprising a minimum of three feed modules, said second feed module mounted on said first feed module, the exterior inverted frustro-conical surface of said second feed module and the interior frustro-conical surface of said first feed module defining therebetween a second resin distribution passage and said third feed module mounted upon said second feed passage.

4. A die according to claim 3, whereas the minimum number of feed modules is five.

5. A die according to claim 3, further comprising at least six layer feed passages in each feed module.

6. The die of claim 1 which is a stackable multi-layer internal bubble cooling annular die comprising:
a. a die base, said base containing resin inlet ports and further having an internal inverted frustro-conical surface,
b. a hollow die body mounted on said die base, the inner surface of said die body having a cylindrical portion and having an inverted frustro-conical portion adjacent to the die base,
c. a feed module mounted on said die base and within said die body, said module having both external and internal inverted frustro-conical surfaces, said external inverted frustro-conical surface having a multiple spiral thread thereon, said feed module having a layer feed passage originating at the centerline of said feed module and ending at the point of origin of a spiral thread, said module having a vertically oriented resin passage not intersecting the center-line for the passage of resin through the feed module, said feed module further having an inclined resin passage intersecting the centerline of this module and said layer feed passages,
d. a sizing ring mounted on said die body, and
e. a die pin mounted on a feed module, said sizing ring and said die pin defining therebetween the annular discharge orifice.

7. A die according to claim 6, further comprising a minimum of three feed modules.

8. A die according to claim 7, wherein the minimum number of feed modules is five.

9. A die according to claim 7, further comprising at least six layer feed passages in a feed module.

10. The die of claim 1, in which the number and location of layers can be changed comprising:
a. a die base having resin inlet passages,
b. a hollow die body matched to the axial length of the selected number of feed modules mounted on said die base and surrounding said layer feed modules, said die body and said layer feed modules defining therebetween an annular resin passage,
c. a layer feed module having an internal frustro-conical surface and external inverted frustro-conical surface adapted to mate with the internal frustro-conical surface of the die base or that of another layer feed module to define therebetween a resin distribution channel, the layer feed module also having a resin through passage and a resin transition passage, said through passages adapted to pass resin from the die base to a module away from the die base, said transition passage adapted to take a selected resin from the die base to the centerline of the layer feed module, a resin feed passage originating at the centerline of said feed module and in operative connection to said transition passage, said resin feed passage ending at said external inverted frustro-conical surface thereby providing a continuous resin passage from the die base to the flow distribution channel,
d. a sizing ring mounted on said die body, and
e. a die pin mounted on the feed module farthest from the die base, said die pin and said sizing ring defining therebetween the annular die discharge orifice, whereby the number of die layers can be altered by changing the number of feed modules and the die body, and in which the layer locations can be altered by rotating the feed module to match the appropriate through passage in the previous layers.

11. The die of claim 10 in which the through passages are arranged in a periodic manner with respect to the layer feed passages.
